Europäisches Patentamt

European Patent Office

Office européen des brevets

(19)

(11) Numéro de publication: **0 206 854 B1**

(12) **FASCICULE DE BREVET EUROPEEN**

(45) Date de publication du fascicule du brevet:
31.01.90

(51) Int. Cl.⁴: **H02G 15/113, H02G 15/013**

(21) Numéro de dépôt: 86401034.3

(22) Date de dépôt: **14.05.86**

(54) Procédé pour protéger les épissures de câbles et manchon pour la mise en oeuvre de ce procédé.

(30) Priorité: 31.05.85 FR 8508219

(43) Date de publication de la demande:
30.12.86 Bulletin 86/52

(45) Mention de la délivrance du brevet:
31.01.90 Bulletin 90/5

(84) Etats contractants désignés:
AT BE CH DE FR GB IT LI LU NL SE

(56) Documents cités:
EP-A- 0 098 765
WO-A-81/01487
DE-C- 168 991

(73) Titulaire: ETABLISSEMENTS MOREL - ATELIERS
ELECTROMECANIQUES DE FAVIERES (Société
Anonyme), Favières,
F-28170 Chateauneuf-en-Thymerais(FR)

(72) Inventeur: **Morel, Jacques,**
**F-28170 Fontaine-les-Ribouts(FR)**
Inventeur: **Morel, Didier, Favières, F-28170 Chateauneuf**
**en Thymerais(FR)**

(74) Mandataire: **Bouju, André, Cabinet Bouju 38 avenue de**
**la Grande Armée, F-75017 Paris(FR)**

**Description**

La présente invention concerne un procédé pour protéger l'épissure d'un câble, notamment téléphonique, au moyen d'un manchon de protection.

L'invention vise également un manchon de protection utilisable pour la mise en œuvre du procédé précité.

On connaît notamment, selon le brevet français 2 469 782, les certificats d'addition français 2 479 545, 2 492 151, 2 529 707 et le WO-A 8 101 487 de la demanderesse, des manchons pour protéger les épissures de câbles téléphoniques comprenant deux demi-coquilles réalisées chacune d'une seule pièce et destinées à être assemblées suivant leurs bords longitudinaux, autour du câble. En particulier, dans le WO-A 8 101 487, les extrémités opposées du manchons comprennent des mâchoires pour serrer radialement et retenir axialement les deux extrémités du câble raccordées par l'épissure. Par ailleurs, des moyens sont prévus pour réaliser l'étanchéité entre les deux demi-coquilles et entre les extrémités du câble et les mâchoires.

Les manchons décrits dans les documents précités protègent efficacement les épissures de câbles contre les chocs mécaniques et l'humidité. Ces manchons présentent toutefois l'inconvénient suivant:

Dans le cas de ces manchons, on réalise d'abord l'épissure entre les deux extrémités de câbles, puis on place ces deux extrémités raccordées du câble dans la première demi-coquille, après quoi, on fixe la deuxième demi-coquille sur la première demi-coquille. A cet effet, on est obligé de réaliser l'épissure en maintenant les deux extrémités du câble dans un support provisoire, indépendant du manchon, qui permet de fixer les deux extrémités de câbles suivant un espacement prédéterminé.

Cette opération est longue et fastidieuse, car elle est souvent exécutée dans des conditions peu confortables. De plus, cette opération ne permet pas de positionner de façon très précise les deux extrémités de câbles l'une par rapport à l'autre.

Par ailleurs, il est nécessaire ensuite de mettre en place sur les deux extrémités de câbles déjà reliées entre elles, des moyens d'étanchéité tels que les mâchoires et des bandes d'étanchéité.

D'autre part, étant donné que les extrémités de câbles sont préalablement reliées entre elles, la manipulation de ce câble est difficile, de sorte que sa mise en place dans le manchon de protection est elle-même difficile. De ce fait, on n'évite pas les risques de défauts de mise en place du câble pouvant entraîner des défauts d'étanchéité.

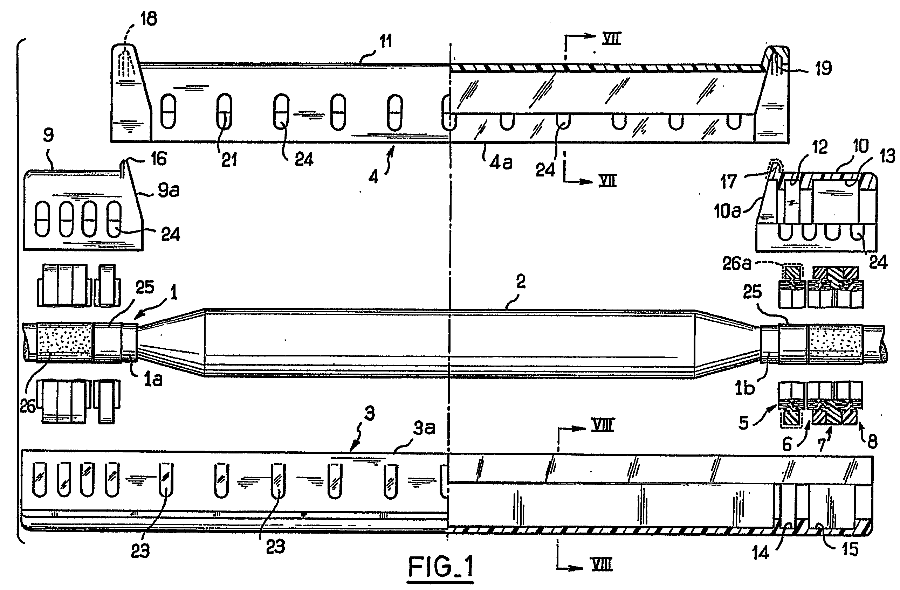

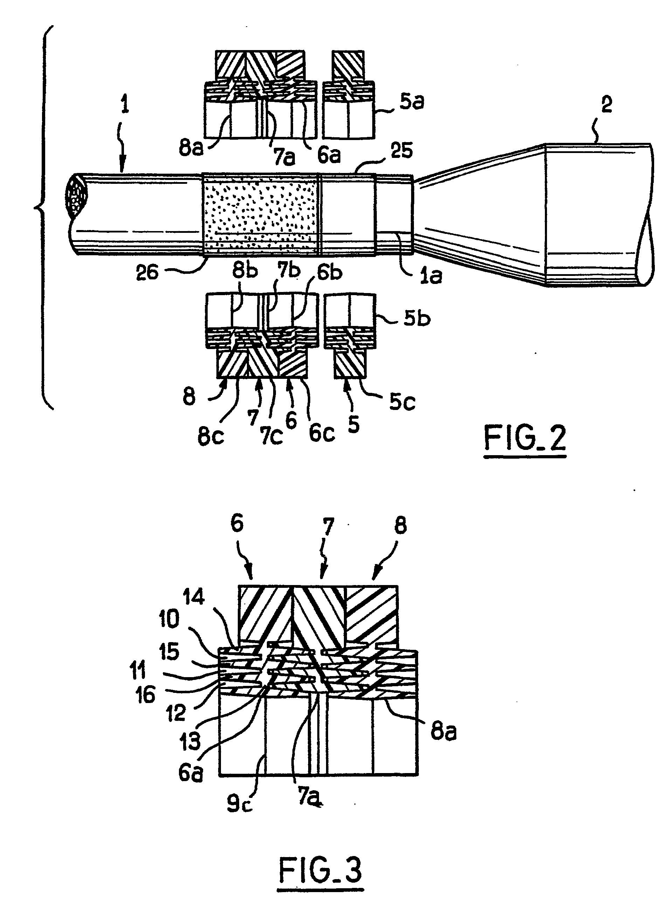

Le document DE-C 168 991 décrit un manchon de câbles constitué d'une partie inférieure recevant un couvercle recouvrant une chambre assurant l'étanchéité, et dont les bords adjacents aux éléments d'extrémité sont conformés pour un serrage radical du câble (voir les figures 1 et 2 et le texte correspondant).

Toutefois, le manchon décrit dans ce document ne comporte pas à ses extrémités des mâchoires de serrage axial du câble assurant à la fois une bonne retenue axiale et une excellente étanchéité.

Le but de la présente invention est de remédier aux inconvénients précités en proposant un procédé pour protéger l'épissure d'un câble au moyen d'un manchon permettant une mise en place très aisée des extrémités de câbles dans ce manchon, tout en évitant les risques de défaut d'étanchéité signalés à propos des réalisations connues.

Le procédé visé par l'invention utilise un manchon comprenant au moins deux demi-coquilles destinées à être assemblées suivant leurs bords longitudinaux, autour de l'épissure du câble, les extrémités opposées du manchon comprenant des mâchoires pour serrer radialement et retenir axialement les deux extrémités du câble raccordées par l'épissure, des moyens étant prévus pour réaliser l'étanchéité entre les deux demi-coquilles et entre les extrémités du câble et les mâchoires, l'une des demi-coquilles étant réalisée d'une seule pièce et la seconde demi-coquille comportant deux éléments d'extrémité destinés à coiffer les mâchoires de serrage et un élément central destiné à être placé entre ces deux éléments d'extrémité, en recouvrant les bords adjacent de ces derniers, le procédé étant caractérisé en ce qu'il comprend les étapes suivantes:

– on place une première série d'éléments de mâchoires aux extrémités opposées de la première demi-coquille,

– on place les deux extrémités de câbles non encore raccordées, sur les éléments de mâchoires correspondant placés à chaque extrémité de la demi-coquille,

– on place une seconde série d'éléments de mâchoires sur les deux extrémités de câble, au droit de la première série d'éléments de mâchoires,

– on coiffe cette seconde série d'éléments de mâchoires par les deux éléments d'extrémité de la seconde demi-coquille et on fixe ceux-ci sur la première demi-coquille, après avoir ajusté eventuellement la position axiale des deux extrémités de câbles,

– on réalise l'épissure entre les deux extrémités de câbles,

– on place entre les deux éléments d'extrémités précités et sur la première demi-coquille, l'élément central de la seconde demi-coquille et on les fixe ensemble.

L'invention a également pour objet un manchon pour la mise en œuvre de ce procédé.

Ainsi, grâce à l'invention, il est possible d'utiliser le manchon lui-même comme support pour réaliser l'épissure, ce qui permet de réaliser celle-ci dans des conditions à la fois précises et aisées.

Par ailleurs, étant donné que les moyens d'étanchéité du câble sont déjà mis en place avant de réaliser l'épissure, on ne risque pas de rencontrer des défauts d'étanchéité du câle dûs aux difficultés rencontrées dans les réalisations connues pour manipuler le câble dont les extrémités sont déjà reliées entre elles. De plus, il est possible ultérieurement, de démonter le manchon en enlevant l'élément central 11, pour contrôler l'épissure, sans détruire l'étanchéité réalisée entre les mâchoires et le câble.

Dans le manchon conforme à l'invention, les mâchoires utilisées pour serrer radialement et retenir axialement les deux extrémités du câble comprennent de préférence chacune deux éléments de mâchoires présentant chacun une encoche en arc de cercle dont le rayon correspond sensiblement à celui du câble, les faces latérales opposées de chaque élément comportant chacune une série de rainures en arc de cercle concentriques avec l'encoche, les fonds des rainures opposées étant reliés par une paroi mince pouvant être coupée. En coupant les éléments de mâchoire, en suivant l'une des rainures en arc de cercle, on peut ajuster le rayon de l'encoche à celui du câble utilisé.

Selon une version avantageuse de l'invention, les rainures définissent entre elles des ailettes présentant un profil complémentaire de celui des rainures.

De ce fait, il est possible de disposer à chaque extrémité du manchon, au moins trois mâchoires juxtaposées, les ailettes de la mâchoire centrale étant emboîtées dans les rainures complémentaires des deux autres mâchoires.

Ces mâchoires emboîtées les unes dans les autres assurent une excellente retenue axiale du câble dans le manchon.

Selon une version préférée de l'invention, chaque extrémité de la mâchoire comprend en outre une quatrième mâchoire espacée des trois autres mâchoires et située plus près de l'épissure que ces trois autres mâchoires.

De préférence, une bande de mastic d'étanchéité est placée entre le câble et les encoches des deux éléments de mâchoire constituant ladite quatrième mâchoire.

De préférence également, une bande adhésive portant des aspérités est placée entre le câble et les encoches des éléments de mâchoire constituant les trois mâchoires juxtaposées, les aspérités étant adjacentes auxdites encoches.

La quatrième mâchoire libre par rapport aux autres est compressible radialement, lors de l'assemblage du manchon, grâce aux rainures en arc de cercle, en garantissant ainsi en combinaison avec la bande d'étanchéité une excellente étanchéité par rapport aux câbles.

Par ailleurs, la bande adhésive portant des aspérités placées entre le câble et les trois autres mâchoires, contribue à l'obtention d'une excellente retenue axiale du câble au manchon.

D'autres particularités et avantages de l'invention apparaîtront encore dans la description ci-après.

Aux dessins annexés donnés à titre d'exemples non limitatifs :

- la figure 1 est une vue éclatée des différents composants du manchon conforme à l'invention, la partie de gauche étant représentée en plan et la partie de droite étant une vue en coupe longitudinale des différents composants,
- la figure 2 est une vue à plus grande échelle d'une partie du câble, placée entre les éléments de mâchoire, représentés en coupe longitudinale,
- la figure 3 est une vue en coupe longitudinale à échelle agrandie, montrant trois éléments de mâchoires emboîtés les uns dans les autres,

- la figure 4 est une vue en plan d'un élément de mâchoire,
- la figure 5 est une vue de dessus de trois éléments de mâchoires avant emboîtement de ceux-ci,
- la figure 6 est une vue en plan, montrant l'intérieur de l'élément central de la seconde demi-coquille,
- la figure 7 est une vue en coupe suivant le plan VII-VII de l'élément central de la seconde demi-coquille représentée sur la figure 1 et,
- la figure 8 est une vue en coupe suivant le plan VIII-VIII de la première demi-coquille représentée sur la figure 1,
- la figure 9 est une vue en bout d'un manchon adapté pour protéger quatre câbles,
- la figure 10 est une vue en coupe longitudinale partielle du manchon de la figure 9.

Dans la réalisation de la figure 1, le manchon réalisé en matière plastique pour protéger l'épissure 2 du câble téléphonique 1, comprend deux demi-coquilles 3, 4 destinées à être assemblées suivant leurs bords longitudinaux 3a, 4a autour de l'épissure 2 du câble 1. Les extrémités opposées du manchon comprennent chacune des mâchoires 5, 6, 7, 8 pour serrer radialement et retenir axialement les deux extrémités 1a, 1b du câble, raccordées par l'épissure 2. Des moyens qui seront détaillés plus loin, sont prévus pour réaliser l'étanchéité entre les deux demi-coquilles 3, 4 et entre les extrémités du câble 1a, 1b et les mâchoires 5, 6, 7, 8.

La première demi-coquille 3 est réalisée d'une seule pièce.

La seconde demi-coquille 4 comporte deux éléments d'extrémité 9, 10 destinés à coiffer les mâchoires de serrage 5, 6, 7, 8 et un élément central 11 destiné à être placé entre ces deux éléments d'extrémité 9, 10 en recouvrant les bords adjacents 9a, 10a de ces derniers.

Les éléments d'extrémité 9, 10 de la seconde demi-coquille 4 et les extrémités de la première demi-coquille 3 comportent des gorges 12, 13 ; 14, 15 de retenue axiale des mâchoires 5, 6, 7, 8, perpendiculaires à l'axe de ces demi-coquilles.

Par ailleurs, le bord 9a, 10a des deux éléments d'extrémité 9, 10 adjacent à l'élément central 11 comporte une nervure 16, 17 en saillie, tandis que les bords adjacents de l'élément central 11 comportent une gorge 18, 19 complémentaire, destinée à recevoir une bande d'étanchéité, par exemple en mastic, pour réaliser l'étanchéité entre les bords adjacents de l'élément central 11 et les éléments d'extrémité 9, 10.

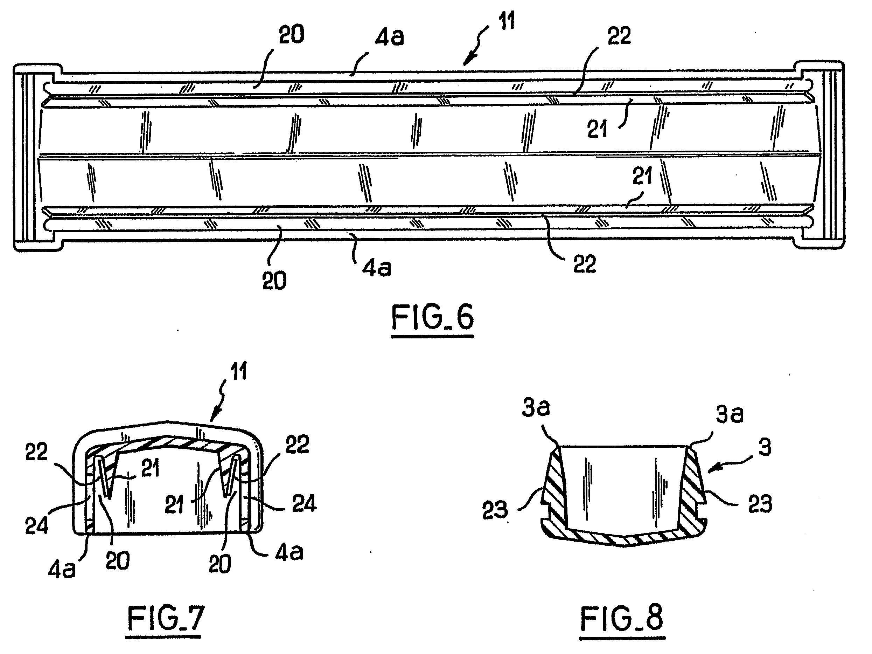

L'élément central 11 et les éléments d'extrémité 9, 10 de la demi-coquille 4 comprennent en leur intérieur et le long de leurs deux bords longitudinaux 4a (voir figures 6 et 7), deux gorges 20 de section en V destinées à recevoir par emboîtement, les bords longitudinaux 3a de section complémentaire de la demi-coquille 3 (voir figure 8).

Dans l'exemple représenté sur les figures 6 à 8, l'étanchéité entre les bords longitudinaux de la demi-coquille 3, de l'élément central 11 et des éléments d'extrémité 9, 10, est réalisée en plaçant à l'intérieur des gorges 20, contre la face latérale des nervures 21 qui définissent ces gorges 20, une bande 22 de mastic d'étanchéité.

On voit d'autre part, notamment sur les figures 7 et 8, que la fixation de l'élément central 11 et des éléments d'extrémité 9, 10 de la demi-coquille 4 sur la demi-coquille 3 est réalisée au moyen de becs d'encliquetage 23 ménagés sur les parois latérales de la demi-coquille 3 et pouvant s'engager dans des ouvertures complémentaires 24 ménagées dans les parois latérales flexibles des éléments d'extrémité 9, 10 et de l'élément central 11 constituant la demi-coquille 4.

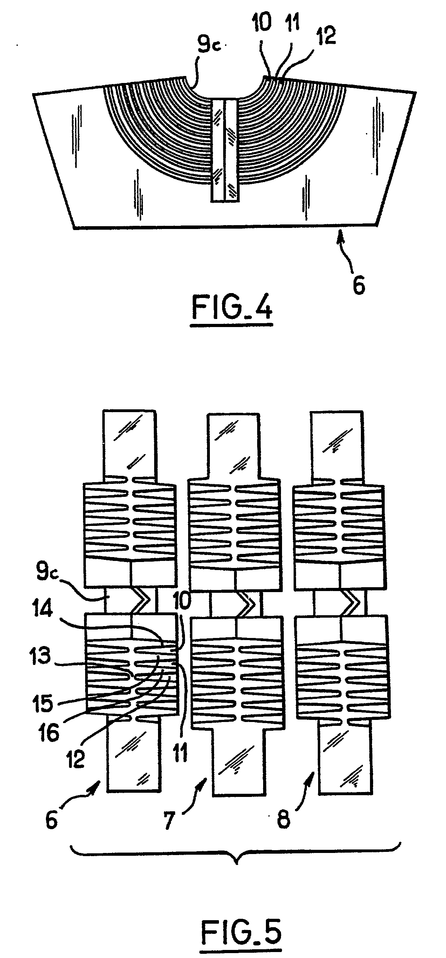

On voit notamment sur les figures 2, 3, 4 et 5, que les mâchoires de serrage 5, 6, 7, 8 comprennent chacune deux éléments de mâchoire 5a, 5b; 6a, 6b; 7a, 7b; 8a, 8b, présentant chacune une encoche sensiblement en arc de cercle, telle que 9c (voir figure 4).

Sur les figures 4 et 5, on voit notamment que les faces latérales opposées de chaque élément de mâchoire comportent chacune une série de rainures en arc de cercle 10, 11, 12 ..., concentriques avec l'encoche 9c. Les fonds des rainures 10, 11, 12, ... opposées sont reliés par une paroi mince 13 (voir figure 5) pouvant être coupée.

Ainsi, en découpant cette paroi mince 13 au moyen d'un outil tranchant approprié et en suivant l'une des rainures telles que 10, 11, 12, ..., il est possible d'adapter le rayon de l'encoche ainsi formée dans les éléments de mâchoire à celui du câble 1 de façon que cette encoche épouse parfaitement le profil du câble 1.

Des mâchoires de ce type sont décrites dans les brevets et certificats d'addition français de la demanderesse cités au début de cette description.

Dans le cas de la présente réalisation (voir figures 3 et 5), les rainures telles que 10, 11, 12 définissent entre elles des ailettes 14, 15, 16 présentant un profil complémentaire de celui des rainures 10, 11, 12...

De plus, comme on le voit sur les figures 1 et 2, chaque extrémité du manchon comprend une série de trois mâchoires juxtaposées 6, 7, 8, les ailettes telles que 14, 15, 16 de la mâchoire centrale 7 étant emboîtées dans les rainures complémentaires des deux autres mâchoires 6, 8.

Par ailleurs, chaque élément de mâchoire comporte une partie non rainurée telle que 6c, 7c, 8c d'épaisseur plus faible que celle de la partie rainurée, l'épaisseur de cette partie non rainurée étant telle que lorsque les ailettes de la mâchoire centrale 7 sont complètement emboîtées dans les rainures complémentaires des deux autres mâchoires 6, 8, les parties non rainurées 6c, 7c, 8c des trois mâchoires 6, 7, 8 prennent appui latéralement les unes contre les autres.

Par ailleurs, l'épaisseur totale des trois parties non rainurées des mâchoires 6, 7, 8 correspond à la largeur des gorges 13, 15 ménagées dans les éléments d'extrémité 9, 10 et dans la demi-coquille 3, de sorte qu'en position d'assemblage les mâchoires 6, 7, 8 sont parfaitement calées dans la direction axiale et ne peuvent fléchir en tirant sur le câble.

On voit également sur les figures 1 et 2 que chaque extrémité du manchon comprend en outre une quatrième mâchoire 5, espacée des deux autres mâchoires 6, 7, 8 et située plus près de l'épissure 2 que ces trois autres mâchoires.

En position d'assemblage du manchon, les deux éléments constituant la mâchoire 5, prennent appui par leurs encoches sur une bande de mastic d'étanchéité 25 enroulée autour de l'extrémité 1a, 1b correspondante du câble.

Par ailleurs, pour compléter l'étanchéité, une bande de mastic d'étanchéité 26a représentée en pointillés sur la figure 1 est placée sur la mâchoire 5 pour établir l'étanchéité entre celle-ci et les gorges 12 14 correspondantes des éléments d'extrémité 9, 10 et de la demi-coquille 3.

Par ailleurs, une bande adhésive 26 portant des aspérités, est placée entre l'extrémité 1a, 1b du câble et les encoches des éléments de mâchoire constituant les trois mâchoires juxtaposées 6, 7, 8, les aspérités étant adjacentes auxdites encoches.

Cette bande adhésive 26 peut comporter à cet effet des grains de particules suffisamment dures telles que de la silice, sur sa face adjacente aux encoches des mâchoires, pour que lors de l'assemblage du manchon, ces particules puissent pénétrer légèrement dans la matière plastique des mâchoires 6, 7, 8.

On va maintenant décrire le procédé pour protéger l'épissure 2 du câble 1 au moyen du manchon conforme à l'invention.

Dans une première étape, on place une première série d'éléments de mâchoire 5a, 6a, 7a, 8a aux extrémités opposées de la première demi-coquille 3.

Dans une seconde étape, on place les deux extrémités 1a, 1b de câbles non encore raccordées mais portant déjà les bandes 25 et 26 de mastic et munie d'aspérités, sur les éléments de mâchoire 5a, 6a, 7a, 8a correspondants, placés à chaque extrémité de la demi-coquille. A ce stade, on ajuste axialement la position des extrémités 1a, 1b de câbles.

Dans une troisième étape, on place une seconde série d'éléments de mâchoire 5b, 6b, 7b, 8b sur les deux extrémités 1a, 1b de câbles au droit de la première série d'éléments de mâchoire 5a, 6a, 7a, 8a.

Dans une quatrième étape, on coiffe la seconde série d'éléments de mâchoire 5b, 6b, 7b, 8b par les deux éléments d'extrémité 9, 10 de la seconde demi-coquille, et on fixe ceux-ci sur la première demi-coquille 3. A cet effet, il suffit de pousser sur les éléments d'extrémité 9, 10 pour que les becs d'encliquetage 23 de la demi-coquille 3 s'engagent dans les ouvertures latérales 24 des éléments d'extrémité 9, 10.

A l'issue de la quatrième étape, les deux extrémités de câbles 1a, 1b sont solidement fixées à la demi-coquille 3 et aux éléments d'extrémité 9, 10 et l'étanchéité est réalisée entre ces extrémités de câbles et les mâchoires 5, 6, 7, 8.

Il est alors possible, dans une cinquième étape, de réaliser dans des conditions très aisées, l'épissure 2 entre les deux extrémités de câbles 1a, 1b.

Dans une dernière étape, on place entre les deux éléments d'extrémité 9, 10 et sur la première demi-coquille 3, l'élément central 11 de la seconde demi-coquille et on les fixe ensemble comme précédemment par encliquetage des becs 23 de la demi-coquille 3 dans les ouvertures 24 de l'élément central 11.

Avant de placer sur la première demi-coquille 3, les deux éléments d'extrémité 9, 10 et l'élément central 11 de la deuxième demi-coquille, on place sur les nervures 16, 17 des éléments d'extrémité 9, 10, une bande de matière d'étanchéité, de façon à réaliser l'étanchéité avec les gorges 18, 19 ménagées sur les bords adjacents de l'élément central 11.

L'étanchéité obtenue entre les extrémités de câbles 1a, 1b et les mâchoires 5 est excellente.

Etant donné que cette mâchoire 5 est libre par rapport aux autres mâchoires 6, 7, 8, cette mâchoire 5 est compressible radialement du fait de l'existence des rainures en arc de cercle. Cette compressibilité radiale est favorable pour l'obtention d'une excellente étanchéité. Par ailleurs, cette étanchéité est encore améliorée par la présence de la bande de mastic d'étanchéité 25 qui permet de compenser le fait que le câble 1 au lieu d'être parfaitement circulaire, présente une ovalisation plus ou moins prononcée.

Par contre, la mâchoire 5 n'assure pas à elle seule une retenue axiale suffisante du câble 1. Cette retenue axiale est assurée par les trois mâchoires 6, 7, 8 emboîtées latéralement les unes dans les autres par leurs rainures et ailettes circulaires complémentaires. Du fait de cet emboîtement, les trois mâchoires 6, 7, 8 ne peuvent fléchir dans un plan perpendiculaire au câble.

Par ailleurs, lors de l'assemblage sous pression des éléments d'extrémité 9, 10, les éléments composant les mâchoires 6, 7, 8 sont serrés contre les extrémités de câbles 1a, 1b, de sorte que les aspérités de la bande adhésive 26 pénètrent légèrement dans la matière plastique de ces mâchoires, en interdisant ainsi toute possibilité de glissement axial du câble 1 par rapport aux mâchoires et à l'ensemble du manchon.

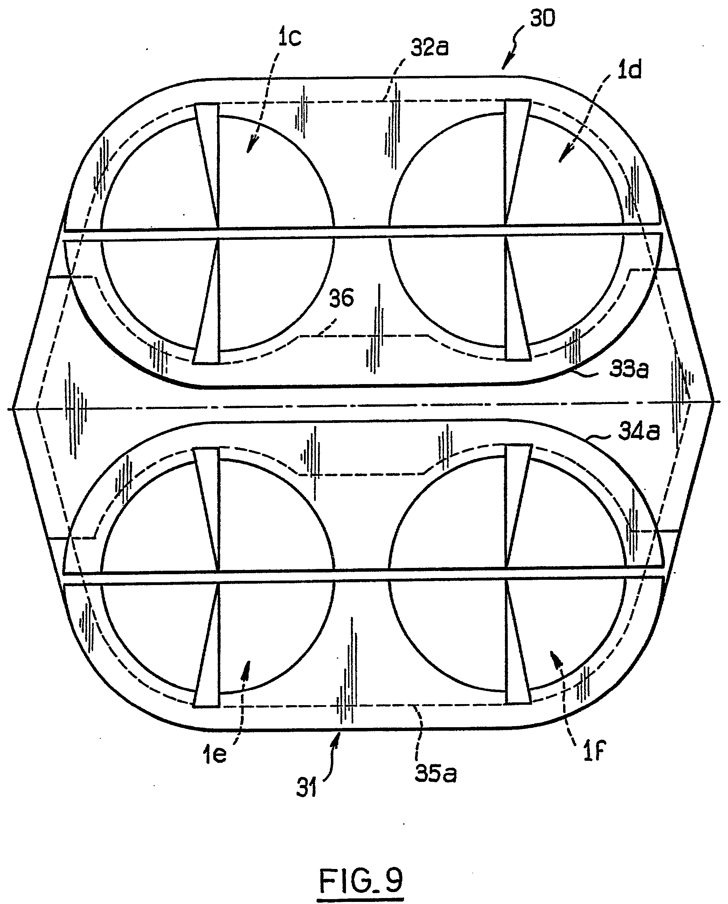

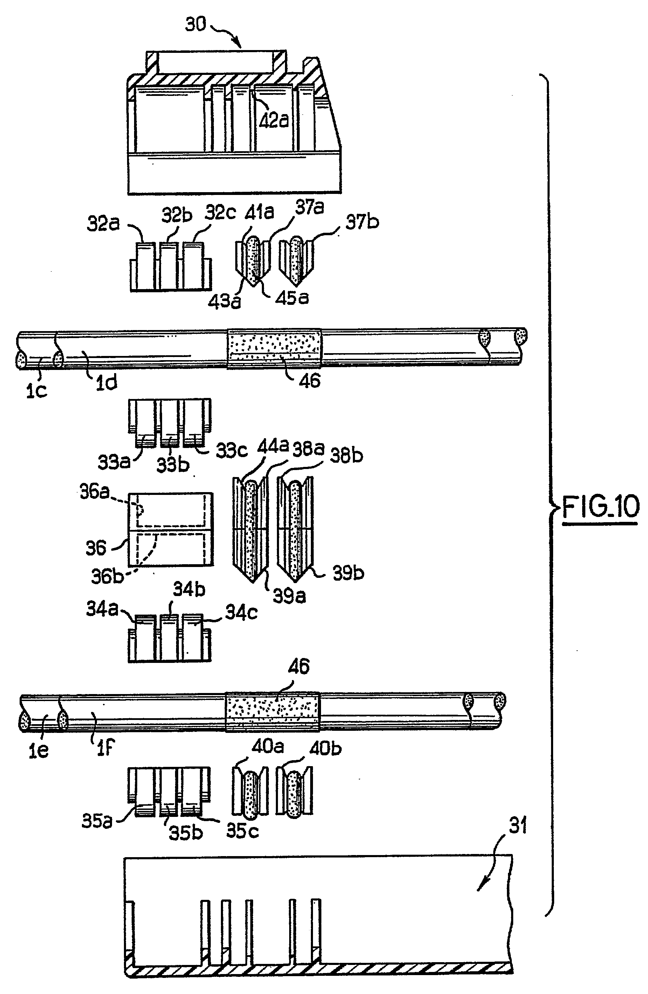

Dans la réalisation des figures 9 et 10, on a représenté un manchon pouvant recevoir quatre câbles 1c, 1d, 1e, 1f.

Comme on le voit sur la figure 10, ce manchon comporte deux éléments d'extrémité 30 analogues aux éléments 9, 10, mais conformés pour recevoir côte à côte les deux câbles supérieurs 1c, 1d, un élément intermédiaire non représenté analogue à l'élément 11, mais également adapté pour recevoir les deux câbles 1c, 1d. Les éléments d'extrémité 30 et l'élément intermédiaire sont destinés à être fixés sur une demi-coquille inférieure 31 analogue à la demi-coquille 3 mais apte à recevoir les deux câbles inférieurs 1e, 1f.

Entre chaque élément d'extrémité 30 et la demi-coquille inférieure 31 sont disposés des éléments de mâchoires 32a, 32b, 32c ; 33a, 33b, 33c ; 34a, 34b, 34c ; 35a, 35b, 35c destinés à être assemblés par paire pour former des mâchoires de serrage des câbles analogues aux mâchoires 6, 7, 8, excepté que chaque élément de mâchoire comprend deux encoches semi-circulaires disposées côte à côte pour recevoir deux câbles 1c, 1d ou 1e, 1f.

Les éléments de mâchoire 32a, 32b, 32c et 33a, 33b, 33c sont destinés à serrer les câbles supérieurs 1c, 1d, tandis que les éléments de mâchoire 34a, 34b, 34c et 35a, 35b, 35c sont destinés à serrer les câbles inférieurs 1e, 1f.

Entre les éléments de mâchoire 33a, 33b, 33c et les éléments de mâchoires 34a, 34b, 34c est disposé un élément intermédiaire 36 présentant deux gorges opposées 36a, 36b adaptées pour recevoir l'extrémité des éléments de mâchoire précités opposée aux câbles 1c, 1d ; 1e, 1f.

En arrière des éléments de mâchoire précités sont disposés des éléments de mâchoires 37a, 37b ; 38a, 38b ; 39a, 39b ; 40a, 40b de structure différente de ceux constituant la mâchoire 5 représentée sur la figure 1.

Les éléments de mâchoire 37a, 37b et 38a, 38b sont destinés à serrer les câbles 1c, 1d, tandis que les éléments de mâchoire 39a, 39b et 40a, 40b sont destinés à serrer les câbles 1e, 1f.

Par ailleurs, les éléments de mâchoire 38a, 38b et 39a, 39b compris entre les paires de câbles 1c, 1d et 1e, 1f, sont réalisés d'une seule pièce et comportent par conséquent quatre encoches opposées par paire pour recevoir les quatre câbles.

L'extrémité des éléments de mâchoires 37a, 37b ; 40a, 40b adjacente à l'élément d'extrémité 30 du manchon ou à la demi-coquille 31 comporte une encoche telle que 41a de section en V destinée à recouvrir une nervure telle que 42a ménagée sur la face intérieure de l'élément de mâchoire 30 ou de la demi-coquille 31.

Par ailleurs, les éléments de mâchoire 37a, 37b comportent sur leur extrémité adjacente aux câbles 1c, 1d une saillie telle que 43a de section en V destinée à pénétrer dans une gorge telle que 44a de section complémentaire ménagée sur l'extrémité des éléments de mâchoire 38a, 38b.

De même, les éléments de mâchoire 39a, 39b comportent des saillies en V destinées à s'engager dans des gorges complémentaires ménagées dans les extrémités adjacentes des éléments de mâchoire 40a, 40b.

On voit de plus sur la figurer 10, que la gorge telle que 41a de chaque élément de mâchoire tel que 37a comporte un cordon de mastic tel que 45a qui l'entoure et qui permet de réaliser lors de l'assemblage du manchon et du serrage des éléments de mâchoire sur les câbles 1c, 1d, 1e, 1f l'étanchéité entre ces éléments de mâchoire, ces câbles et l'élément d'extrémité 30 et la demi-coquille 31. L'étanchéité ainsi réalisée est renforcée par la présence d'une bande adhésive 46 enroulée autour des câbles 1c, 1d, 1e, 1f sur laquelle les éléments de mâchoire 37a à 40b sont destinés à venir en appui.

Bien entendu, dans le cas de la réalisation selon la figure 1 dans laquelle le manchon est adapté à ne recevoir qu'un seul câble, les éléments de mâchoire constituant la mâchoire 5 pourraient être remplacés par des éléments de mâchoire analogues aux éléments tels que 37a à 40b.

Par ailleurs, la bande adhésive 26 ou 46 pourrait être remplacée par une bande en matière plastique présentant des picots sur l'une ou sur ses deux faces, moulés avec la matière de cette bande et susceptibles de pénétrer dans la gaine du câble 1 et/ou dans la matière plastique des mâchoires. Il suffit à cet effet, que la matière plastique de cette bande soit plus dure que celles de la gaine du câble et des mâchoires.

## Revendications

1. Procédé pour protéger l'épissure d'un câble, notamment téléphonique, au moyen d'un manchon, comprenant au moins deux demi-coquilles (3, 4) destinées à être assemblées suivant leurs bords longitudinaux (3a, 4a), autour de l'épissure (2) du câble (1), les extrémités opposées du manchon comprenant des mâchoires (5, 6, 7, 8) pour serrer radialement et retenir axialement les deux extrémités du câble (1a, 1b) raccordées par l'épissure (2), des moyens étant prévus pour réaliser l'étanchéité entre les deux demi-coquilles (3, 4) et entre les extrémités (1a, 1b) du câble et les mâchoires, l'une (3) des demi-coquilles étant réalisée d'une seule pièce et la seconde demi-coquille (4) comportant deux éléments d'extrémité (9, 10), destinés à coiffer les mâchoires de serrage (5, 6, 7, 8) et un élément central (11) destiné à être placé entre ces deux éléments d'extrémité, en recouvrant les bords adjacents (9a, 10a) de ces derniers, le procédé étant caractérisé en ce qu'il comprend les étapes suivantes:
   – on place une première série d'éléments de mâchoires (5a, 6a, 7a, 8a) aux extrémités opposées de la première demi-coquille (3),
   – on place les deux extrémités de câbles (1a, 1b) non encore raccordées, sur les éléments de mâchoire correspondant placés à chaque extrémité de la demi-coquille (3),
   – on place une seconde série d'éléments de mâchoire (5b, 6b, 7b, 8b) sur les deux extrémités de câbles (1a, 1b) au droit de la première série d'éléments de mâchoire,
   – on coiffe cette seconde série d'éléments de mâchoire par les deux éléments d'extrémité (9, 10) de la seconde demi-coquille et on fixe ceux-ci sur la première demi-coquille (3), après avoir ajusté éventuellement la position axiale des deux extrémités de câbles,
   – on réalise l'épissure (2) entre les deux extrémités de câbles,
   – on place entre les deux éléments d'extrémité (9, 10) et sur la première demi-coquille (3), l'élément central (11) de la seconde demi-coquille et on les fixe ensemble.

2. Procédé conforme à la revendication 1, caractérisé en ce qu'avant de placer les extrémités de câbles (1a, 1b) sur les éléments de mâchoire, on fixe sur ces extrémités de câbles, une bande de mastic d'étanchéité (25) et une bande adhésive (26) comportant des aspérités.

3. Procédé conforme à l'une des revendications 1 ou 2, caractérisé en ce qu'avant de placer sur la première demi-coquille (3) les deux éléments d'extrémité (9, 10) et l'élément central (11) de la deuxième demi-coquille, on place sur les bords d'assemblage de ces éléments, des bandes en matière d'étanchéité.

4. Manchon pour la mise en œuvre du procédé conforme à l'une des revendications 1 à 3, caractérisé en ce que les éléments d'extrémité (9, 10) de la seconde demi-coquille et les extrémités de la première demi-coquille (3) comportent des gorges (12, 13; 14, 15) de retenue des mâchoires (5, 6, 7, 8).

5. Manchon conforme à la revendication 4, caractérisé en ce que le bord (9a, 10a) des deux éléments d'extrémité (9, 10) adjacents à l'élément central (11) comportent une nervure en saillie (16, 17), les bords adjacents de l'élément central (11) comportant une gorge complémentaire (18, 19) destinée à recevoir une bande d'étanchéité.

6. Manchon conforme à l'une des revendications 4 ou 5, les mâchoires de serrage (5, 6, 7, 8) comprenant chacune deux éléments (5a, 5b, ... 8a, 8b) de mâchoire présentant chacun une encoche (9c) en arc de cercle, les faces latérales opposées de chaque élément comportant chacune une série de rainures en arc de cercle (10, 11, 12) concentriques avec l'encoche (9c) les fonds des rainures opposées étant reliés par une paroi (13) pouvant être coupée, caractérisé en ce que les rainures (10, 11, 12) définissent entre elles des ailettes (14, 15, 16) présentant un profil complémentaire de celui des rainures.

7. Manchon conforme à la revendication 6, caractérisé en ce que chaque extrémité du manchon comprend au moins trois mâchoires juxtaposées (6, 7, 8), les ailettes (14, 15, 16) de la mâchoire centrale (7) étant emboîtées dans les rainures complémentaires (10, 11, 12) des deux autres mâchoires.

8. Manchon conforme à la revendication 7, caractérisé en ce que chaque élément de mâchoire comporte une partie non rainurée (6c, 7c, 8c) d'épaisseur plus faible que celle de la partie rainurée, l'épaisseur de cette partie non rainurée étant telle que lorsque les ailettes de la mâchoire centrale (7) sont complètement emboîtées dans les rainures complémentaires des deux autres mâchoires (6, 8), les parties non rainurées (6c, 7c, 8c) des trois mâchoires prennent appui latéralement les unes contre les autres.

9. Manchon conforme à l'une des revendications 7 ou 8, caractérisé en ce que chaque extrémité du manchon comprend en outre une quatrième mâchoire (5) espacée des trois autres mâchoires (6, 7, 8) et située plus près de l'épissure (2) que ces trois autres mâchoires.

10. Manchon conforme à la revendication 9, caractérisé en ce qu'une bande de mastic d'étanchéité (25) est placée entre le câble (1) et les encoches (9c) des deux éléments de mâchoire (5a, 5b) constituant la quatrième mâchoire (5).

11. Manchon conforme à l'une des revendications 7 à 10, caractérisé en ce qu'une bande adhésive (26) portant des aspérités est placée entre le câble (1) et les encoches (9c) des éléments de mâchoire constituant les trois mâchoires juxtaposées (6, 7, 8), les aspérités étant adjacentes auxdites encoches.

12. Manchon conforme à la revendication 11, caractérisé en ce que la bande adhésive (26) comporte des grains de particules dures sur sa face adjacente auxdites encoches.

13. Manchon conforme à la revendication 9, caractérisé en ce que les éléments de mâchoire (37a, ... 40a) comprennent sur l'une de leurs extrémités une gorge (41a) de section en V engagée sur une nervure (42a) ménagée sur la face interne de l'élément d'extrémité (30) et de la demi-coquille (31) et sur son autre extrémité, une saillie (43a) engagée dans une gorge (44a) de section en V ménagée sur l'élément de mâchoire adjacent et en ce qu'un cordon de mastic (45a) est logé dans les gorges (41a, 44a) de façon à réaliser l'étanchéité entre ces éléments de mâchoire, l'élément d'extrémité (30) et la demi-coquille (31) d'une part et entre ces éléments de mâchoire et le câble (1c, ...) d'autre part.

14. Manchon conforme à l'une des revendications 4 à 13, caractérisé en ce qu'il est adapté pour recevoir deux ou plusieurs câbles (1c, 1d; 1e, 1f) et en ce que chaque élément de mâchoire (32a, ... 35a; 37a, ... 40b) est adapté pour serrer deux câbles.

**Claims**

1. A method of protecting the splice of a cable, inter alia a telephone cable, by means of a sleeve comprising at least two half-shells (3, 4) adapted to be fitted together along their longitudinal edges (3a, 4a) around the splice (2) of the cable (1), the opposite ends of the sleeves comprising jaws (5, 6, 7, 8) for radially clamping and axially retaining the two cable ends (1a, 1b) connected by the splice (2), means being provided for sealing-tightness between the two half-shells (3, 4) and between the cable ends (1a, 1b) and the jaws, one (3) of the half-shells being made in one piece and the second half-shell (4) comprising two end components (9, 10) adapted to fit over the clamping jaws (5, 6, 7, 8) and a central component (11) adapted to be placed between the two end components and cover the adjacent edges (9a, 10a) thereof, the method being characterised in that it comprises the following steps:
   – a first set of jaw components (5a, 6a, 7a, 8a) is placed at the opposite ends of the first half-shell (3),
   – the two cable ends (1a, 1b), before being connected, are placed on the corresponding jaw components placed at each end of the half-shell (3),
   – a second set of jaw components (5b, 6b, 7b, 8b) is placed on the two cable ends (1a, 1b) level with the first set of jaw components,
   – the two end components (9, 10) of the second half-shell are placed over the second set of components and fixed to the first half-shell (3), after adjusting the axial position of the two cable ends if necessary,
   – the splice (2) is made between the two cable end, and
   – the central component (11) of the second half-shell is placed between the two end components (9, 10) and on the first half-shell (3) and they are secured together.

2. A method according to claim 1, characterised in that before placing the cable ends (1a, 1b) on the jaw components, a strip of sealing compound (25) and an adhesive strip (26) having rough portions are secured to the cable ends.

3. A method according to claim 1 or 2, characterised in that before placing the two end components (9, 10) and the central component (11) of the second half-shell on the first half-shell (3), strips of sealing material are placed on the connecting edges of these components.

4. A sleeve for working the method according to any of claims 1 to 3, characterised in that the end components (9, 10) of the second half-shell and the ends of the first half-shell (3) are formed with grooves (12, 13; 14, 15) for retaining the jaws (5, 6, 7, 8).

5. A sleeve according to claim 4, characterised in that the edges (9a, 10a) of the two end components (9, 10) adjacent the central component (11) comprise a projecting rib (16, 17), and the adjacent edges of the central component (11) are formed with a complementary groove (18, 19) adapted to receive a sealing strip.

6. A sleeve according to claim 4 or 5, the clamping jaws (5, 6, 7, 8) each comprising two jaw components (5a, 5b, ...8a, 8b) each formed with an arcuate slot (9c), the opposite sides of each component each being formed with a set of arcuate grooves (10, 11, 12) concentric with the slot (9c), the bottoms of the opposite grooves being connected by a wall (13) which can be cut, characterised in that the grooves (10, 11, 12) together define between them fins (14, 15, 16) having a cross-section complementary with that of the grooves.

7. A sleeve according to claim 6, characterised in that each end of the sleeve comprises at least three juxtaposed jaws (6, 7, 8), the fins (14, 15, 16) of the central jaw (7) being fitted into the complementary grooves (10, 11, 12) in the other two jaws.

8. A sleeve according to claim 7, characterised in that each jaw component has a non-grooved part (6c, 7c, 8c) which is thinner than the grooved part, the thickness of the non-grooved part being such that when the fins of the central jaw (7) have completely fitted into the complementary grooves in the other two jaws (6, 8), the non-grooved parts (6c, 7c, 8c) of the three jaws bear laterally against one another.

9. A sleeve according to claim 7 or 8, characterised in that each sleeve end also comprises a fourth jaw (5) spaced apart from the other three jaws (6, 7, 8) and disposed nearer the splice (2) than the other three jaws.

10. A sleeve according to claim 9, characterised in that a strip of sealing compound (25) is placed between the cable (1) and the notches (9c) in the two jaw elements (5a, 5b) constituting the fourth jaw (5).

11. A sleeve according to any of claims 7 to 10, characterised in that an adhesive strip (26) bearing rough portions is placed between the cable (1) and the slots (9c) in the jaw components constituting the three juxtaposed jaws (6, 7, 8), the rough parts being adjacent the slots.

12. A sleeve according to claim 11, characterised in that the adhesive strip (26) comprises grains of hard particles on its surface adjacent the slots.

13. A sleeve according to claim 9, characterised in that at one end, the jaw components (37a, ...40a) have a V-section groove (41a) engaging a rib (42a) formed on the inner surface of the end component (30) and of the half-shell (31), while the other end of the jaw components has a projection (43a) which engages in a V-section groove (44a) formed on the adjacent jaw component, and a ribbon of sealing material (45a) is disposed in the grooves (41a, 44a) to form a seal between these jaw components, the end component (30) and the half-shell (31) on the one hand and between the jaw components and the cable (1c, ...) on the other hand.

14. A sleeve according to any of claims 4 to 13, characterised in that it is adapted to receive two or more cables (1c, 1d; 1e, 1f) and each jaw component (32a, ...35a; 37a, ...40b) is adapted to clamp two cables.

## Patentansprüche

1. Verfahren zum Schutz des Spleißes eines Kabels, insbesondere Telefonkabels, mittels einer Muffe mit wenigstens zwei Halbschalen (3, 4), die dazu bestimmt sind, entlang ihren Längsrändern (3a, 4a) um den Spleiß (2) des Kabels (1) herum zusammengesetzt zu werden, wobei die einander gegenüberliegenden Enden der Muffe Spannbacken (5, 6, 7, 8) aufweisen, um die beiden durch den Spleiß (2) verbundenen Kabelenden (1a, 1b) radial zusammenzuspannen und axial zu halten, und Mittel vorgesehen sind, um die Abdichtung zwischen den beiden Halbschalen (3, 4) und zwischen den Kabelenden (1a, 1b) sowie den Spannbacken zu verwirklichen, und wobei eine (3) der Halbschalen einteilig ausgebildet ist und die zweite Halbschale (4) zwei Endelemente (9, 10) zum Aufsetzen auf die Spannbacken (5, 6, 7, 8) und ein zentrales Element (11) aufweist, das dazu bestimmt ist, zwischen diesen beiden Endelementen in Stellung gebracht zu werden und die benachbarten Ränder (9a, 10a) derselben abzudecken, dadurch gekennzeichnet, daß es folgende Schritte umfaßt:
— eine erste Reihe von Backenelementen (5a, 6a, 7a, 8a) wird an den einander gegenüberliegenden Enden der ersten Halbschale (3) in Stellung gebracht,
— die beiden noch nicht verbundenen Kabelenden (1a, 1b) werden auf die entsprechenden Backenelemente gelegt, die an jedem Ende der Halbschale (3) angeordnet sind,
— eine zweite Reihe von Backenelementen (5b, 6b, 7b, 8b) wird an den beiden Kabelenden (1a, 1b) gegenüber der ersten Reihe von Backenelementen in Stellung gebracht,
— auf diese zweite Reihe von Backenelementen werden die zwei Endelemente (9, 10) der zweiten Halbschale aufgesetzt, und auf diesen wird die erste Halbschale (3) befestigt, nachdem gegebenenfalls die Axialstellung der beiden Kabelenden justiert wurde,
— der Spleiß (2) zwischen den beiden Kabelenden wird hergestellt,
— zwischen den beiden Endelementen (9, 10) und auf der ersten Halbschale (3) wird das zentrale Element (11) der zweiten Halbschale in Stellung gebracht, und die gesamte Einheit wird zusammengespannt.

2. Verfahren nach Anspruch 1, dadurch gekennzeichnet, daß vor dem Auflegen der Kabelenden (1a, 1b) auf die Backenelemente an diesen Kabelenden ein Streifen einer Dichtmasse (25) und ein Unebenheiten aufweisender Haftstreifen (26) befestigt werden.

3. Verfahren nach Anspruch 1 oder 2, dadurch gekennzeichnet, daß vor dem Aufbringen der beiden Endelemente (9, 10) und des zentralen Elementes (11) der zweiten Halbschale auf der ersten Halbschale (3) Streifen aus einem Dichtungsmaterial auf den Montagerändern dieser Elemente aufgebracht werden.

4. Muffe zur Ausführung des Verfahrens nach einem der Ansprüche 1 bis 3, dadurch gekennzeichnet, daß die Endelemente (9, 10) der zweiten Halbschale und die Enden der ersten Halbschale (3) Nuten (12, 13; 14, 15) zum Halten der Spannbacken (5, 6, 7, 8) aufweisen.

5. Die Muffe nach Anspruch 4, dadurch gekennzeichnet, daß der Rand (9a, 10a) der beiden Endelemente (9, 10), welche dem zentralen Element (11) benachbart sind, eine vorspringende Rippe (16, 17) aufweist, wobei die benachbarten Ränder des zentralen Elements (11) eine komplementäre Nut (18, 19) zur Aufnahme eines Dichtungsstreifens aufweisen.

6. Muffe nach Anspruch 4 oder 5, bei welcher die Spannbacken (5, 6, 7, 8) jeweils zwei Backenelemente (5a, 5b, ...8a, 8b) umfassen, die jeweils eine kreisbogenförmige Aussparung (9c) aufweisen, wobei die einander gegenüberliegenden Seitenflächen jedes Elementes jeweils eine Reihe von kreisbogenförmigen Rillen (10, 11, 12) aufweisen, die konzentrisch mit der Aussparung (9c) liegen, und wobei die Böden der einander gegenüberliegenden Rillen durch eine Wandung (13) verbunden sind, die geschnitten sein kann, dadurch gekennzeichnet, daß die Rillen (10, 11, 12) zwischen sich Flügel (14, 15, 16) bilden, die ein Profil aufweisen, das komplementär zu dem der Rillen ist.

7. Muffe nach Anspruch 6, dadurch gekennzeichnet, daß jedes Muffenende wenigstens drei nebeneinander angeordnete Spannbacken (6, 7, 8) aufweist, wobei die Flügel (14, 15, 16) der zentralen Spannbacke (7) in die komplementären Rillen (10, 11, 12) der beiden anderen Spannbacken eingesteckt sind.

8. Muffe nach Anspruch 7, dadurch gekennzeichnet, daß jedes Backenelement einen nicht gerillten Teil (6c, 7c, 8c) von geringerer Dicke als die Dicke des gerillten Teils aufweist, wobei die Dicke dieses nicht gerillten Teiles so bemessen ist, daß die nicht gerillten Teile (6c, 7c, 8c) der drei Spannbacken, wenn die Flügel der zentralen Spannbacke (7) vollständig in die komplementären Rillen der zwei anderen Spannbacken (6, 8) eingesteckt sind, sich seitlich gegeneinander abstützen.

9. Muffe nach Anspruch 7 oder 8, dadurch gekennzeichnet, daß jedes Muffenende ferner eine vierte Spannbacke (5) aufweist, die von den drei anderen Spannbacken (6, 7, 8) beabstandet ist und näher bei dem Spleiß (2) als die drei anderen Spannbacken liegt.

10. Muffe nach Anspruch 9, dadurch gekennzeichnet, daß ein Streifen aus Dichtmasse (25) zwischen dem Kabel (1) und den Aussparungen (9c) der beiden die vierte Spannbacke (5) bildenden Backenelemente (5a, 5b) angeordnet ist.

11. Muffe nach einem der Ansprüche 7 bis 10, dadurch gekennzeichnet, daß ein Unebenheiten aufweisender Haftstreifen (26) zwischen dem Kabel (1) und den Aussparungen (9c) der die drei nebeneinanderliegenden Spannbacken (6, 7, 8) bildenden Backenelemente angeordnet ist, wobei die Unebenheiten an diese Aussparungen angrenzen.

12. Muffe nach Anspruch 11, dadurch gekennzeichnet, daß der Haftstreifen (26) Körner aus harten Teilchen auf seiner an diese Aussparungen angrenzenden Fläche aufweist.

13. Muffe nach Anspruch 9, dadurch gekennzeichnet, daß die Backenelemente (37a, ...40a) an einem ihrer Enden eine Nut (41a) mit V-förmigem Querschnitt aufweisen, die auf eine Rippe (42a) aufgesetzt ist, welche auf der Innenfläche des Endelementes (30) und der Halbschale (31) angebracht ist, und an ihrem anderen Ende einen Vorsprung (43a) aufweisen, der in eine Nut (44a) mit V-förmigem Querschnitt eingreift, welche an dem daran angrenzenden Backenelement angebracht ist, und daß eine Schnur aus Dichtmasse (45a) in den Nuten (41a, 44a) derart eingelegt ist, daß sie die Abdichtung zwischen diesen Backenelementen, dem Endelement (30) und der Halbschale (31) einerseits sowie zwischen diesen Backenelementen und dem Kabel (1c...) andererseits verwirklicht.

14. Muffe nach einem der Ansprüche 4 bis 13, dadurch gekennzeichnet, daß sie dazu eingerichtet ist, zwei oder mehr Kabel (1c, 1d; 1e, 1f) aufzunehmen, und daß jedes Backenelement (32a, ...35a; 37a, ...40b) zum Einspannen von zwei Kabeln ausgebildet ist.

FIG_1

EP 0 206 854 B1

FIG_2

FIG_3

FIG.4

FIG.5

EP 0 206 854 B1

FIG_6

FIG_7

FIG_8

FIG.9

FIG. 10